# EUROPÄISCHE PATENTANMELDUNG

(11) **EP 1 111 210 A2**
(43) Veröffentlichungstag der Anmeldung: **27.06.2001**
(21) Anmeldenummer: 00128046.0
(22) Anmeldetag: 21.12.2000
(51) Int. Cl.: F01N 3/20, F01N 3/02

(54) **Abgasanlage für Kraftfahrzeuge**

(30) Priorität: 23.12.1999 DE 19962527
(71) Anmelder: Faurecia Abgastechnik GmbH, 90765 Fürth (DE)
(72) Erfinder: Unbehaun, Martin, 90409 Nürnberg (DE)
(74) Vertreter: Mörtel & Höfner

(57) **Zusammenfassung**

Abgasanlage für Kraftfahrzeuge mit einem von Abgas durchströmbaren Wärmetauscher (1) und mit einem zum Wärmetauscher (1) hinführenden Zuführkanal (5) sowie einem vom Wärmetauscher (1) wegführenden Abführkanal 6. Es ist ein 4/2-Wegeventil (2) vorgesehen, an das beide Kanäle jeweils mit einer Einströmöffnung (7,9) sowie einer Ausströmöffnung (8,10) angeschlossen sind. In einer ersten Schaltstellung I sind die jeweils einem Kanal zugeordneten Öffnungen miteinander verbunden. In einer zweiten Schaltstellung SII des Ventils (2) ist jeweils die Einströmöffnung (7,9) des einen Kanals mit der Ausströmöffnung (8,10) des anderen Kanals unter Bildung eines Bypasses verbunden.

## Beschreibung

Die Erfindung betrifft eine Abgasanlage für Kraftfahrzeuge mit einem Wärmetauscher. Ein Wärmetauscher dient z.B. dazu, dass Abgas zu kühlen, um einen nachgeschalteten Abgaskatalysator vor Überhitzung zu schützen. Da andererseits eine katalytische Umsetzung erst bei höheren Temperaturen stattfindet, ist eine Abgaskühlung in der Kaltstartphase und im Niederlastbereich des Motors nicht erwünscht. Hier wird im Gegenteil eine schnelle Aufheizung des Katalysators angestrebt. Aus diesem Grunde ist in aller Regel ein Bypass vorgesehen, mit dem in den genannten Situationen das Abgas unter Umgehung des Wärmetauschers umgeleitet werden kann. In JP 0600212608 A und EP 0886039 A1 sind solche Abgasanlagen beschrieben. Das Abgas wird mit einem Zuführkanal einem Kühler zugeführt und von dort mit Hilfe eines Abführkanals weg geleitet. In Strömungsrichtung gesehen vor dem Kühler zweigt ein Bypasskanal ab, der nach dem Kühler mit dem Abführkanal wieder einmündet. In der stromaufwärts liegenden Verzweigungsstelle ist ein Ventil angeordnet, das in einer ersten Schaltstellung den Zuführkanal freigibt und den Bypass schließt und in einer zweiten Stellung den Zuführkanal schließt und den Bypass freigibt. Es handelt sich somit im Prinzip um ein 3/2-Wegeventil, das beispielsweise als Klappenventil ausgestaltet sein kann. Die bekannten Abgasanlagen haben den Nachteil, dass trotz abgeschalteter Kühlung, d.h. also bei verschlossenem Zuführkanal der Kühler über die stromabwärts gelegene Verzweigungsstelle mit dem Abgasstrom in Verbindung steht. Wenn der Druck im Abgas steigt, wird dieses in den Kühler hineingepresst und dort gekühlt. In einer anschließenden Niederdruckphase strömt das gekühlte Abgas aus dem Kühler heraus und wird dem Abgasstrom beigemengt. Aufgrund der in der Regel sehr hohen Pulsationsfrequenz des Abgases ergibt sich auf diese Weise ein nicht unerheblicher unerwünschter Kühleffekt.

Aufgabe der Erfindung ist es, eine Abgasanlage vorzuschlagen, bei der dieser Nachteil umgangen ist.

Diese Aufgabe wird gemäß Anspruch 1 dadurch gelöst, dass ein 4/2-Wegeventil vorgesehen ist, an das der Zuführkanal und der Abführkanal jeweils mit einer Einströmöffnung und einer Ausströmöffnung angeschlossen sind, wobei in der ersten Schaltstellung des Ventils die jeweils einem Kanal zugeordneten Öffnungen miteinander verbunden sind und in der zweiten Schaltstellung die genannten Öffnungen voneinander getrennt sind, wobei jedoch die Einströmöffnung des Zuführkanals mit der Ausströmöffnung des Abführkanals unter Bildung eines Bypasses verbunden ist. Dadurch, dass die einem Kanal zugeordneten Öffnungen von einander getrennt sind, ist der Wärmetauscher von beiden Seiten her abgeschlossen, so dass ein eingangs- oder ausgangsseitiges Hineinpulsieren von Abgas ausgeschlossen ist. Die Abtrennung des Wärmetauschers vom Abgasstrom ist daher wesentlich wirksamer als bei den bekannten Abgasanlagen. Vorteilhaft bei der vorgeschlagenen Lösung ist weiterhin, dass sich damit eine kompakte Bauweise der Abgasanlage realisieren lässt. Insbesondere kann die Länge des den Kühler umgehenden Bypasses stark reduziert werden. Im Falle der weiter oben erwähnten Kaltstartphase und während Niederlastfahrten ist dies im Sinne einer schnellen Aufheizung des Abgaskatalysators vorteilhaft. Je länger nämlich der Bypasskanal ist, desto größer ist die von Fahrtluft gekühlte Außenfläche und desto größer ist die Masse der den Bypasskanal umgrenzenden Wand.

Für das 4/2-Wegeventil bieten sich aufgrund der in einem Abgasstrom vorherrschenden rauen Einsatzbedingungen vor allen Dingen Ventilklappen als Schließelemente an. Bei einer bevorzugten Ausführungsform ist das Ventil jedoch so gestaltet, dass eine einzige Ventilklappe verwendet werden kann, wobei deren Drehachse mittig angeordnet ist, so dass sie die Klappe in zwei Hälften unterteilt. Vorzugsweise wird die Kammer von einem Rohrabschnitt gebildet, der von einer in Richtung seiner Mittellängsachse verlaufenden, mit einer Durchgangsöffnung versehenen Trennwand in zwei Teilkammern unterteilt ist. Die Trennwand erstreckt sich dabei in die Stirnöffnungen des Rohrabschnittes hinein und teilt diese in jeweils einem Kanal zugeordnete Einström- und Ausströmöffnungen. Die Ventilklappe ist um eine Drehachse drehbar gelagert, die in der Ebene der Trennwand verläuft und die sich quer zur Mittellängsachse sowie durch die Durchgangsöffnung hindurch erstreckt. In ihrer ersten Schaltstellung verschließt die Ventilklappe die Durchgangsöffnung. In ihrer zweiten Schaltstellung verläuft ihre Planebene quer zur Mittellängsachse. Ihr Rand liegt dabei dichtend an der Innenfläche des Rohrabschnitts an. Dadurch, dass die Teilkammern gegensinnig durchströmt sind, werden bei der genannten Querstellung der Ventilklappe die Einströmöffnung des Zuführkanals mit der Ausströmöffnung des Abführkanals verbunden, so dass das Abgas unter Umgehung des Wärmetauschers direkt zu einem Abgaskatalysator bzw. in die Atmosphäre gelangt. Der Wärmetauscher selbst ist bei der in Rede stehenden Querstellung der Ventilklappe eingangs- und ausgangsseitig vom Abgashauptstrang abgetrennt.

Insbesondere hinsichtlich der Herstellung und Montage ist eine kreisrunde oder ovale Querschnittsform des Rohrabschnittes und dementsprechend eine kreisrunde oder ovale Außenkontur der Ventilklappe gewählt. Die Herstellung des Rohrabschnittes wir dadurch vereinfacht, dass die eine Durchgangsöffnung enthaltende Trennwand aus zwei Teiltrennwänden gebildet ist, deren einander zugewandte Ränder die Durchgangsöffnung umgrenzen. Die mit dem Rohrabschnitt verbundenen Rohrbereiche sind entsprechend den Aus- bzw. Eintrittsöffnungen am Rohrabschnitt geformt. Sie weisen vorzugsweise eine gemeinsame, mit der Trennwand fluchtende Zwischenwand auf. In montagetechnischer Hinsicht besonders bevorzugt ist eine Ausführungsform, bei der die Zwischenwände der mit dem Rohrabschnitt verbindbaren Rohrbereiche mit den Teiltrennwänden des Rohrabschnitts einstückig verbunden sind. Zur Montage werden die aus den Rohrbereichen herausstehenden Zwischenwände in den Rohrabschnitt bei darin bereits montierter Ventilklappe hineingesteckt. Sie bilden dort die oben erwähnte Trennwand.

Die Erfindung wird nun anhand von in den beigefügten Zeichnungen dargestellten Ausführungsbeispielen näher erläutert. Es zeigen:
- Fig.1: ein Blockschaltbild einer Abgasanlage mit einem Kühler, einem Abgaskatalysator und einem 4/2-Wegeventil,
- Fig.2: ein Blockschaltbild entsprechend Fig. 1, bei der sich das Wegeventil in einer anderen Schaltstellung befindet,
- Fig.3: ein erstes Ausführungsbeispiel einer Abgasanlage in ausschnittsweiser schematischer Darstellung,
- Fig.4: ein weiteres Ausführungsbeispiel einer Abgasanlage in einer ausschnittsweisen schematischen Darstellung,
- Fig.5: einen Querschnitt entsprechend Linie V-V in Fig.4,
- Fig.6: den ein 4/2-Wegeventil enthaltenden Ausschnitt VI von Fig.4 und
- Fig.7: den Ausschnitt entsprechend Fig.6, wobei sich das Ventil in einer anderen Schaltstellung befindet.

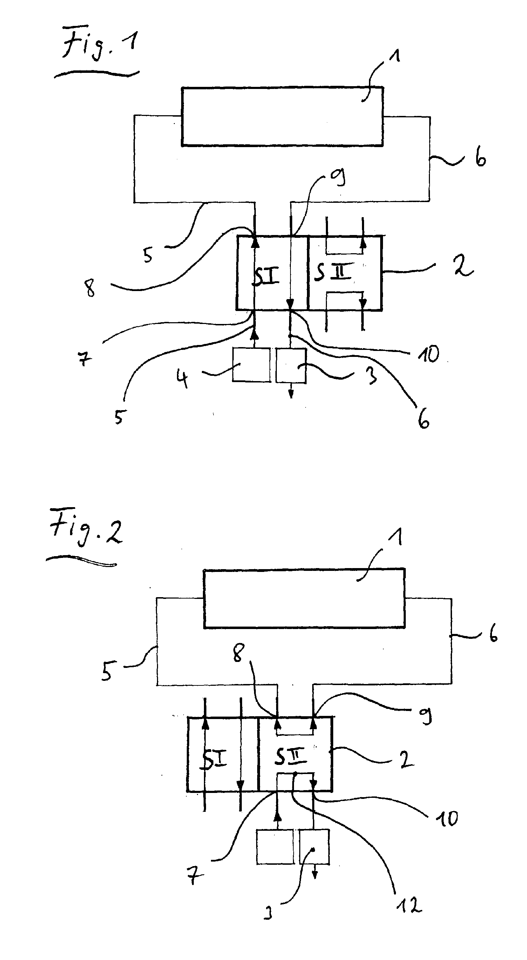

Die in Fig.1 schematisch dargestellte Abgasanlage umfasst einen Wärmetauscher 1 und ein 4/2-Wegeventil 2, das den Abgasstrom so steuert, dass er bedarfsweise durch den Wärmetauscher hindurch- oder an ihm vorbeigeführt werden kann. Im dem gezeigten Beispiel ist der Wärmetauscher 1 ein Kühler, der einem Abgaskatalysator 3 vorgeschaltet ist. Das von einem Verbrennungsmotor 4 ausgestoßene Abgas wird über einen Zuführkanal 5 zum Wärmetauscher 1 hin und über einen Abführkanal 6 vom Wärmetauscher weg und zum Abgaskatalysator hingeleitet. Der Zuführkanal 5 und der Abführkanal 6 sind so verlegt, dass zwei Abschnitte in unmittelbarer Nähe zueinander und derart verlaufen, dass sie gegensinnig von Abgas durchströmt sind. In diesen Abschnitten ist das Ventil 2 angeordnet. Der Zuführkanal 5 ist mit einer Einströmöffnung 7 und einer Ausströmöffnung 8, der Abführkanal 6 mit einer Einströmöffnung 9 und einer Ausströmöffnung 10 an das Ventil 2 angeschlossen. In der in Fig.1 dargestellten Schaltstellung SI des Ventils 2 sind die dem Zuführkanal 5 zugeordneten Öffnungen 7,8 und die dem Abführkanal zugeordneten Öffnungen 9,10 miteinander verbunden. Das Abgas wird somit durch den Wärmetauscher 1 hindurch geführt und gelangt infolge dessen gekühlt zum Katalysator 3. Wenn eine Kühlung nicht erforderlich bzw. hinderlich ist, wird das Ventil 2 in die in Fig.2 dargestellte Schaltstellung SII gebracht. Die den Kanälen 5,6 zugeordneten Öffnungen 7,8 und 9,10 sind jeweils voneinander getrennt. Dementsprechend kann über die Einströmöffnung 7 in das Ventil einströmendes Abgas weder eingangsseitig, d.h. über die Ausströmöffnung 8, noch ausgangsseitig, d.h. über die Einströmöffnung 9, zum Wärmetauscher 1 gelangen. Der Wärmetauscher 1 ist somit in der Schaltstellung SII des Ventils 2 vollständig vom Abgasstrom abgetrennt. Das Abgas strömt vielmehr über einen innerhalb des Ventils vorhandenen Bypasskanal 12 zur Ausströmöffnung 10 des Abführkanals und somit unter Umgehung des Wärmetauschers 1 direkt zum Abgaskatalysator 3.

Bei dem in Fig.3 dargestellten Ausführungsbeispiel ist das Ventil 2 von einer Kammer 13 und einer darin drehbar angeordneten Ventilklappe 14 gebildet. Die Kammer 13 bzw. das sie umgrenzende Gehäuse 15 und die Ventilklappe 14 sind im Querschnitt quadratisch. Zwei Abschnitte des Zuführkanals 5 und des Abführkanals 6 verlaufen parallel und mit seitlichem Abstand zueinander und sind über die bereits erwähnten Ein- und Ausströmöffnungen 7-10, die in einander gegenüberliegenden Wänden 16 vorhanden sind, angeschlossen. Die Drehachse 17 der Ventilklappe 14 ist zentral in der Kammer 13 angeordnet, wobei sie rechtwinklig zu den gegensinnigen Strömungsrichtungen 18, 19 und in einer zu den Wänden 16 parallelen Ebene verläuft. Die Schwenkachse 17 ist so angeordnet, dass sie die Ventilklappe 14 in zwei gleich große Flügel 20, 21 unterteilt. Der Drehbereich der Ventilklappe 14 beträgt etwa 90°. In den beiden Schaltstellungen SI,SII liegt die Ventilklappe 14 mit ihrem Rand 22 an der Innenseite 23 des Gehäuses 15 an. Das Gehäuse 15 muss jedoch nicht unbedingt die in Fig.3 gezeigte Form aufweisen, es kann z.B. auch einen kreisrunden Querschnitt haben. Es ist auch nicht zwingend erforderlich, dass die Öffnungen so angeordnet sind wie in Fig.3 gezeigt. Deren Position am Gehäuse 15 ist viel mehr beliebig. Ganz allgemein müssen die Ventilklappe 14 und das Gehäuse 15 so aufeinander abgestimmt sein, dass die Kammer 13 in der Schaltstellung SI in zwei Teilkammern 28,29 unterteilt ist, wobei in der einen Unterkammer die Öffnungen 7 und 8 und in der anderen Unterkammer die Öffnungen 9 und 10 angeordnet sind. In der Schaltstellung II, in der die Ventilklappe gegenüber der Schaltstellung I beispielsweise um 90° verdreht ist, unterteilt sie die Kammer in zwei weitere Unterkammern, wobei die Öffnung 8 und 9 in der einen Unterkammer, also auf der einen Seite der Ventilklappe, und die Öffnungen 7 und 10 in der anderen Unterkammer bzw. auf der anderen Seite der Ventilklappe 14 angeordnet sind, sofern gewährleistet ist, dass in der Schaltstellung SII die Einströmöffnung 7 des Zuführkanals 5 mit der Ausströmöffnung 10 des Abführkanals 6 verbunden ist, wobei das Abgas den durch den Strömungspfeil 24 angedeuteten Weg nimmt, und das in der Schaltstellung SI (gestrichelt dargestellt) die einem Kanal zugeordneten Öffnungen miteinander verbunden sind, wobei das Abgas den durch die Strömungsrichtungen 18, 19 angedeuteten durch den Wärmetauscher 1 führenden Weg nimmt.

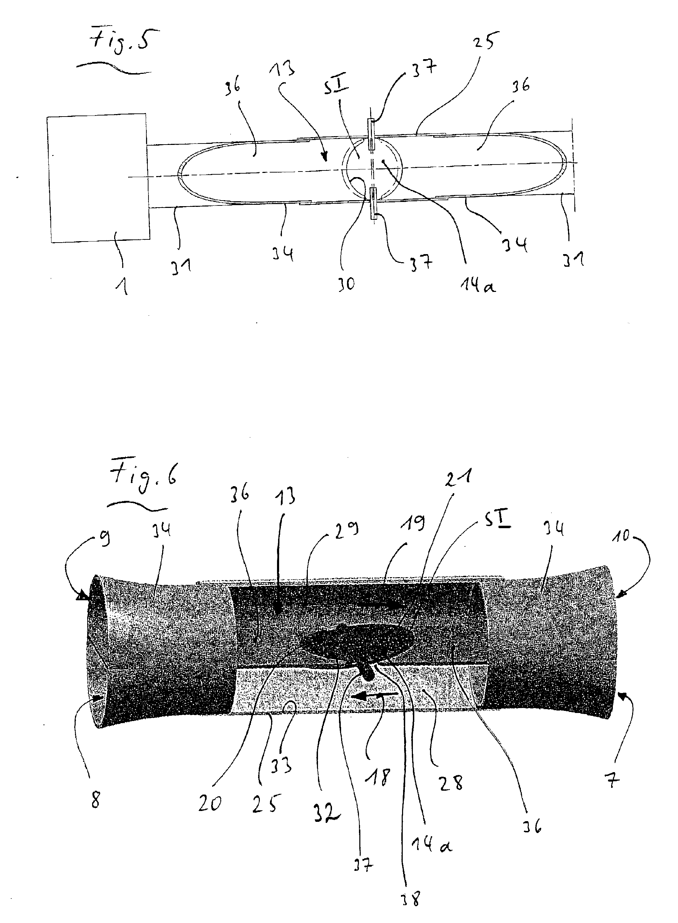

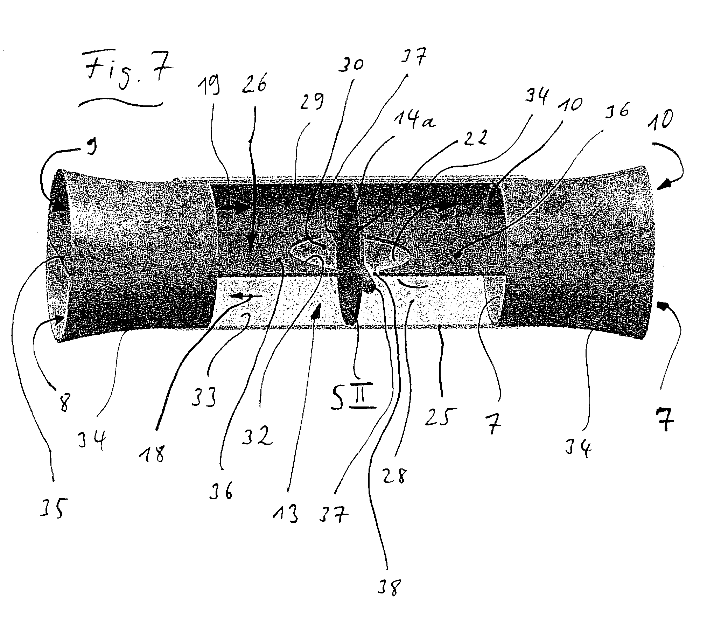

Bei dem in Fig.4 dargestellten Ausführungsbeispiel ist die Kammer 13 von dem Innenraum eines Rohrabschnittes 25 gebildet. Im Rohrabschnitt 25 ist eine sich in Richtung seiner Mittellängsachse 27 erstreckende Trennwand 26 vorhanden, die die Kammer 13 in zwei Teilkammern 28,29 unterteilt. Die Trennwand 26 erstreckt sich in die Stirnöffnungen des Rohrabschnittes 25 hinein und unterteilt diese Öffnungen jeweils in eine Einströmöffnung 7,9 und in eine Ausströmöffnung 8,10. Etwa in der Mitte des Rohrabschnittes 25 ist in der Trennwand 26 eine Durchgangsöffnung 30 angeordnet. Weiterhin ist im Rohrabschnitt 25 eine Ventilklappe 14a um eine Drehachse 17a drehbar gelagert. Die Ventilklappe 14a ist eine Kreisscheibe, die in der Schaltstellung SII mit ihrem Rand mit der Innenfläche 33 des im Querschnitt ebenfalls kreisförmigen Rohrabschnittes 26 dichtend zusammenwirkt. Neben der Kreisform sind natürlich auch andere Querschnitts- bzw. Umrissformen denkbar. Die Schwenkachse 17a erstreckt sich quer zur Mittellängsachse 27 und verläuft in der Ebene der Trennwand 26. Außerdem erstreckt sich die Schwenkachse 17a in der Planebene der Öffnung 30, wobei sie die Öffnung 30 in zwei etwa gleich große Hälften unterteilt (siehe insbesondere Fig.7). In ihrer Schaltstellung SI liegt die Ventilklappe 14 mit ihren Außenseiten am Öffnungsrand 32 an und verschließt somit die Durchgangsöffnung 30. In dieser am besten in Fig.6 erkennbaren Schaltstellung sind die beiden Teilkammern 28 und 29 gegensinnig in Strömungsrichtung 18 und 19 durchströmt. In der Schaltstellung SII dagegen, die am besten in Fig.7 zu erkennen ist, liegt die Ventilklappe 14a mit ihrem Rand 22 an der Innenfläche 33 des Rohrabschnitts 25 dichtend an und versperrt die Teilkammern 28 und 29. Das über die Öffnung 7 einströmende Abgas durchströmt demzufolge die Durchgangsöffnung 30, was durch den Pfeil 24 angedeutet ist, zur Ausströmöffnung 10. Der Bypass wird somit alleine von der Durchgangsöffnung 30 gebildet.

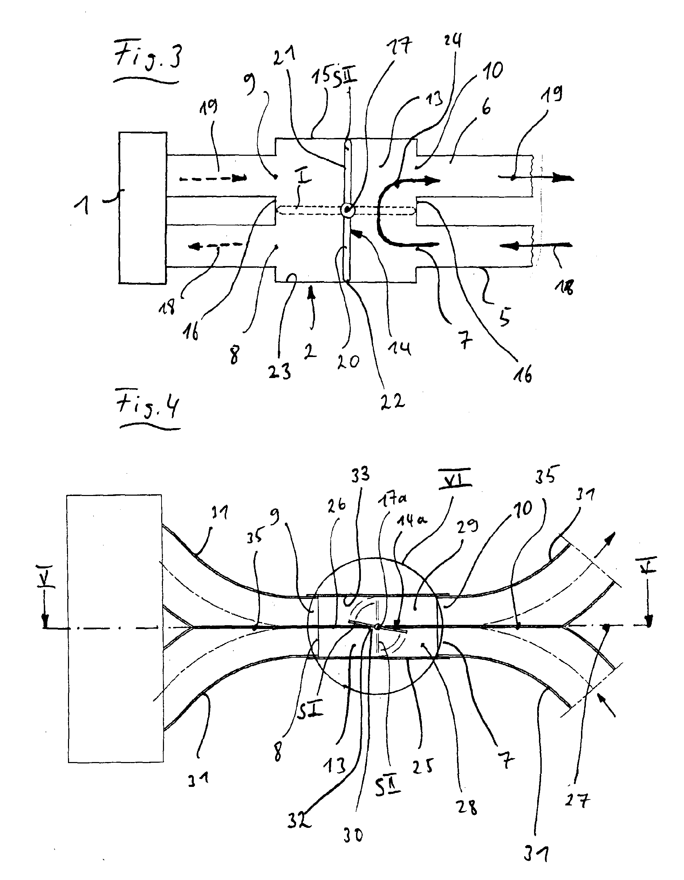

Der Zuström- und Abgaskanal 5,6 wird üblicherweise durch Rohre 31 gebildet. Die mit dem Rohrabschnitt 25 verbundenen Bereiche 34 dieser Rohre 31 weisen eine den Ein- bzw. Ausströmöffnungen 7-10 entsprechende Umrissform auf. Sie sind weiterhin durch eine gemeinsame Zwischenwand 35 voneinander getrennt. Die Trennwand 26 des Rohrabschnittes 25 ist in zwei Teiltrennwände 36 untergliedert, die einstückig mit den Zwischenwänden 35 der Rohrbereiche 34 verbunden sind. Die einander zugewandten Ränder der Teiltrennwände umgrenzen dabei die Durchgangsöffnung 30. Die Drehachse 17a der Ventilklappe 14a wird durch zwei seitlich von der Ventilklappe abstehende Zapfen 37 gebildet, die sich in einen zwischen den Teiltrennwänden 36 vorhandenen Zwischenraum 28 hinein und durch den Rohrabschnitt 25 hindurch nach außen erstrecken (siehe Fig.5). Die aus dem Rohrabschnitt25 herausragenden Zapfenden sind mit einem Stellantrieb (nicht dargestellt) verbunden.

Die Rohrabschnitte 34 sind in den Rohrabschnitt eingesteckt und dort beispielsweise durch eine Verschweißung fixiert. Ihre dem Rohrabschnitt 25 abgewandten Enden gehen nach Art einer hosenförmigen Rohrverzweigung in die Rohre 31 mit beispielsweise kreisförmigen Durchmesser über.

Bezugszeichenliste
- 1: Wärmetauscher
- 2: 4/2-Ventil
- 3: Abgaskatalysator
- 4: Verbrennungsmotor
- 5: Zuführkanal
- 6: Abführkanal
- 7: Einströmöffnung
- 8: Ausströmöffnung
- 9: Einströmöffnung
- 10: Ausströmöffnung
- 12: Bypasskanal
- 13: Kammer
- 14: Ventilklappe
- 15: Gehäuse
- 16: Wand
- 17: Drehachse
- 18: Strömungsrichtung
- 19: Strömungsrichtung
- 20: Flügel
- 21: Flügel
- 22: Rand
- 23: Innenseite
- 24: Strömungspfeil
- 25: Rohrabschnitt
- 26: Trennwand
- 27: Mittellängsachse
- 28: Teilkammer
- 29: Teilkammer
- 30: Durchgangsöffnung
- 31: Rohr
- 32: Öffnungsrand
- 33: Innenfläche
- 34: Rohrbereich
- 35: Zwischenwand
- 36: Teiltrennwand
- 37: Zapfen
- 38: Zwischenraum

- SI: Schaltstellung
- SII: Schaltstellung

## Patentansprüche

1. Abgasanlage für Kfz., mit einem von Abgas durchströmbaren Wärmetauscher (1) und mit einem zum Wärmetauscher (1) hinführenden Zuführkanal (5) sowie einem vom Wärmetauscher (1) wegführenden Abführkanal (6),
gekennzeichnet durch
ein 4/2-Wegeventil (2), an das beide Kanäle jeweils mit einer Einströmöffnung (7,9) sowie mit einer Ausströmöffnung (8,10) angeschlossen sind, wobei
- in einer ersten Schaltstellung (I) die jeweils einem Kanal zugeordneten Öffnungen (7,8 bzw. 9,10) miteinander verbunden sind und
- in einer zweiten Schaltstellung (II) die einem Kanal zugeordneten Öffnungen voneinander getrennt sind, wobei die Einströmöffnung (7,9) des Zuführkanals mit der Ausströmöffnung (8,10) des Abführkanals unter Bildung eines Bypasses verbunden ist.

2. Abgasanlage nach Anspruch 1,
dadurch gekennzeichnet,
dass das 4/2-Wegeventil (2) von einer Kammer (13) und einer darin zwischen den zwei Schaltstellungen drehbar gelagerten Ventilklappe (14) gebildet ist.

3. Abgasanlage nach Anspruch 2,
dadurch gekennzeichnet,
- dass die Kammer (13) von einem Rohrabschnitt (25) gebildet ist, der von einer in Richtung seiner Mittellängsachse (27) verlaufenden, mit einer Durchgangsöffnung (30) versehenen Trennwand (26) in zwei Teilkammern (28,29) unterteilt ist, wobei sich die Trennwand (26) in die Stirnöffnungen des Rohrabschnitts (25) hinein erstreckt und diese jeweils in eine Einströmöffnung (7,9) und eine Ausströmöffnung (8,10) unterteilt, und
- dass die Ventilklappe (14) um eine Drehachse (17) drehbar ist, die in der Ebene der Trennwand (26) verläuft und die sich quer zur Mittellängsachse (27) und durch die Durchgangsöffnung (30) hindurch erstreckt, wobei die Ventilklappe (14) in ihrer ersten Schaltstellung (I) die Durchgangsöffnung (30) verschließt und in ihrer zweiten Schaltstellung (II) sich quer zur Mittellängsachse erstreckt und mit ihrem Rand dichtend an der Innenfläche (33) des Rohrabschnitts (25) anliegt.

4. Abgasanlage nach Anspruch 3,
dadurch gekennzeichnet,
dass der Rohrabschnitt (25) eine kreisrunde Querschnittsform aufweist.

5. Abgasanlage nach Anspruch 3 oder 4,
dadurch gekennzeichnet,
dass die Trennwand (25) aus zwei Teiltrennwänden (36) gebildet ist, deren einander zugewandte Ränder die Durchgangsöffnung (30) umgrenzen.

6. Abgasanlage nach einem der Ansprüche 3 bis 5,
dadurch gekennzeichnet,
dass die Kanäle von Rohren gebildet sind, deren stirnseitig mit dem Rohrabschnitt (25) verbundene Rohrbereiche (34) eine den Aus- bzw. Eintrittsöffnungen entsprechende Querschnittsform aufweisen, wobei sie mit einer gemeinsamen Zwischenwand (35) aneinandergrenzen.

7. Abgasanlage nach Anspruch 6,
dadurch gekennzeichnet,
dass die Zwischenwände (35) der Rohrbereiche (34) mit den Teiltrennwänden (36) des Rohrabschnitts (25) einstückig verbunden sind.
